# EUROPEAN PATENT APPLICATION

(11) **EP 4 678 365 A1**
(43) Date of publication of application: **14.01.2026**
(21) Application number: 24306176.9
(22) Date of filing: 12.07.2024
(51) Int. Cl.: B29B 7/00, C08J 3/20, C08K 5/17, C08L 67/04, C09J 167/04, C09J 11/06, C09J 11/08, C08G 63/06, C08G 65/48

(54) **PROCESS IMPLEMENTING A POLYHYDROXYALKANOATE**

(71) Applicant: Bostik SA, 92800 Puteaux (FR)
(72) Inventor: CROMER, Brian, 60280 Venette (FR); PRENVEILLE, Thomas, 27470 Serquigny (FR); SIMON, Frédéric, 60280 Venette (FR)
(74) Representative: Arkema Patent

(57) **Abstract**

The invention relates to a process comprising melting a mixture (M1) at a temperature of at least 110°C to provide a mixture (M2), wherein the mixture (M1) comprises:
- a polyhydroxyalkanoate comprising repeating units derived from 3-hydroxypropionic acid, 3-hydroxybutyric acid, 3-hydroxyvaleric acid, 4-hydroxybutyric acid, 5-hydroxyvaleric acid and/or 3-hydroxyhexanoic acid, and
- an amine.

The invention also relates to a composition obtainable by the process according to the invention.

The invention further relates to the use of the composition according to the invention as a thermoplastic resin, a hot-melt adhesive or a polymer blend.

Finally, the invention relates to an article comprising the composition according to the invention.

## Description

### TECHNICAL FIELD

The present invention relates to a process implementing a polyhydroxyalkanoate, a composition obtainable by the process and its use, and an article.

### TECHNICAL BACKGROUND

Polyhydroxyalkanoates are a class of thermoplastic polyesters generally prepared by micro-organism biosynthesis. Several types of polyhydroxyalkanoates are known; they can be homopolymers or copolymers, and comprise repeating units derived from one or more hydroxy carboxylic acids, for example 3-hydroxybutyric acid.

Many polyhydroxyalkanoates are both bio-based and biodegradable, and accordingly have attracted recent commercial interest as raw materials for truly sustainable products, i.e. products that are compostable, bio-sourced, and require low carbon footprint to manufacture.

Polyhydroxyalkanoate biosynthesis is a fermentation technique wherein micro-organisms transform a feedstock into polyhydroxyalkanoates. The polyhydroxyalkanoates are then isolated from the micro-organisms through downstream processing techniques.

However, the isolated polyhydroxyalkanoates have a low melt flow index (they remain highly viscous even at high temperatures), preventing their use for applications such as injection molding, hot melt adhesives, and polymer blends.

It is practically very difficult to prepare low viscosity polyhydroxyalkanoates by biosynthesis, due to complexities associated with biosynthesis (involving complex interactions which can create unintended consequences if changes are made).

Therefore, there is a need for low viscosity polyhydroxyalkanoates which could be easily and quickly obtained from the isolated polyhydroxyalkanoates, without significantly increasing the cost of the polyhydroxyalkanoates.

It would also be advantageous if the end product (comprising a low viscosity polyhydroxyalkanoate) could be prepared in a continuous process directly from the isolated polyhydroxyalkanoates.

### SUMMARY OF THE INVENTION

The invention relates to a process comprising melting a mixture (M1) at a temperature of at least 110°C to provide a mixture (M2), wherein the mixture (M1) comprises:
- a polyhydroxyalkanoate comprising repeating units derived from 3-hydroxypropionic acid, 3-hydroxybutyric acid, 3-hydroxyvaleric acid, 4-hydroxybutyric acid, 5-hydroxyvaleric acid and/or 3-hydroxyhexanoic acid, and
- an amine.

The invention also relates to a composition obtainable by the process according to the invention.

The invention further relates to the use of the composition according to the invention as a thermoplastic resin, a hot-melt adhesive or a polymer blend.

Finally, the invention relates to an article comprising the composition according to the invention.

The present invention makes it possible to address the needs mentioned above. In particular, the present invention provides an easy and quick process to decrease the viscosity of the claimed polyhydroxyalkanoates, which does not require the addition of costly ingredients. Furthermore, such viscosity decrease and preparation of the end products (such as hot melt adhesives) can be achieved in a continuous process, which saves costs and time.

### DESCRIPTION OF THE INVENTION

### Process

### Melting step

The process according to the invention comprises a step of melting a mixture (M1) at a temperature of at least 110°C, preferably at least 140°C, more preferably at least 160°C, to provide a mixture (M2). It is understood that the temperature should be enough to melt the mixture (M1).

Advantageously, the mixture (M1) is melted at a temperature of at most 250°C, preferably at most 220°C, more preferably at most 200°C.

For example, the mixture (M1) can be melted at a temperature comprised between 110°C and 250°C, preferably between 140°C and 220°C, more preferably between 160°C and 200°C.

The melting step may be performed with a melting device. The melting device may be a batch equipment (such as Z Blade Mixer) or a continuous melt processing device, preferably a continuous melt processing device, more preferably a screw extruder (e.g. single, twin-screw extruder, farrel continuous mixer or a co-kneader such as the one commercialized by Buss AG), in particular a single or twin screw extruder. When a screw extruder is used for the melting step, the process according to the invention can be performed in an injection molding machine comprising a screw extruder, the mixture being injected in a molding cavity after the melting step.

The melting step is preferably carried out while mixing. The mixing speed may be comprised between 5 RPM and 1200 RPM (revolutions per minute), preferably between 7 RPM and 600 RPM, more preferably between 10 RPM and 200 RPM. The mixing speed generally depends on the dimensions and design of the melting device. When the melting step is performed with a screw extruder, the mixing speed corresponds to the rotating speed of the screw.

The melting step may last between 5 seconds and 30 minutes, preferably between 30 seconds and 15 minutes, more preferably between 1 minute and 10 minutes. When a continuous melt processing device is implemented, the melting duration can be considered as the residence time of the polyhydroxyalkanoate and amine in the device.

In the context of the invention, the ranges of values are understood to be inclusive. For example, the range "between 0% and 25%" includes, in particular, the values 0% and 25%.

### Polyhydroxyalkanoate in the mixture (M1)

Polyhydroxyalkanoates consist of repeating units derived from one or more hydroxy acids: 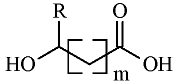 wherein m is an integer equal to 1, 2 or 3.

For example, poly(3-hydroxybutyrate), which can also be called poly(3-hydroxybutyric acid), consists of repeating units derived from 3-hydroxybutyric acid, linked together by an ester bond. It can be represented by the following formula, wherein n is at least equal to 2:

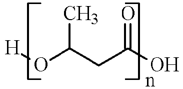

Preferably, the polyhydroxyalkanoate is a bio-based polyester, generally produced by microorganisms.

The polyhydroxyalkanoate comprises repeating units derived from 3-hydroxypropionic acid, 3-hydroxybutyric acid, 3-hydroxyvaleric acid, 4-hydroxybutyric acid, 5-hydroxyvaleric acid and/or 3-hydroxyhexanoic acid, preferably 3-hydroxybutyric acid, 3-hydroxyvaleric acid and/or 4-hydroxybutyric acid.

By "derived from", it is intended that the polyhydroxyalkanoate comprises repeating units having a chemical structure corresponding to the hydroxy acids linked by an ester bond (as described above for poly(3-hydroxybutyrate)). However, the polyhydroxyalkanoate is not necessarily obtained directly from these hydroxy acids (for example, micro-organisms can produce polyhydroxyalkanoates from carbon sources other than hydroxy acids).

Preferably, the polyhydroxyalkanoate comprises more than 70 mol% of repeating units derived from 3-hydroxypropionic acid, 3-hydroxybutyric acid, 3-hydroxyvaleric acid, 4-hydroxybutyric acid and/or 5-hydroxyvaleric acid (preferably 3-hydroxybutyric acid, 3-hydroxyvaleric acid and/or 4-hydroxybutyric acid), preferably more than 80 mol%, more preferably more than 90 mol%, even more preferably 100 mol%, the mol% being calculated with respect to the total number of moles of repeating units constituting the polyhydroxyalkanoate. The mol% can be determined by ¹H NMR.

Optionally, the polyhydroxyalkanoate may further comprise repeating units derived from 3-hydroxyheptanoic acid, 3-hydroxyoctanoic acid, 3-hydroxynonanoic acid, 3-hydroxydecanoic acid, 3-hydroxyoundecanoic acid and/or 3-hydroxyoctadecanoic acid.

For example, the polyhydroxyalkanoate may be poly(3-hydroxybutyrate-co-3-hydroxyvalerate) and/or poly(3-hydroxybutyrate-co-4-hydroxybutyrate).

The polyhydroxyalkanoate may have a melting point comprised between 45°C and 190°C. The melting point may be measured by Differential Scanning Calorimetry (DSC) preferably at a heating rate of 20 K/min and the melting point being determined on the second heating cycle.

The polyhydroxyalkanoate may have a number average molecular weight comprised between 50000 g/mol and 2000000 g/mol. The number average molecular weight of a polyhydroxyalkanoate can be measured by ¹H NMR (Nuclear Magnetic Resonance) end group analysis, for example as described in Example 1 below. It could also be measured by size exclusion chromatography, for example with a polystyrene calibration.

The polyhydroxyalkanoate content may be comprised between 1 % and 99.99 % by weight with respect to the total weight of the mixture (M1), preferably between 5 % and 99.98 % by weight, more preferably between 10 % and 99.97 % by weight.

### Amine in the mixture (M1)

The amine can be a monoamine (comprising only one amine group) and/or a polyamine (comprising at least two amine groups). Preferably the amine is a monoamine not comprising any hydroxy group and/or the amine is a polyamine, more preferably the amine is a polyamine, in particular a diamine. The amine may be used as a purified raw material and/or a component of another product, for example agricultural byproducts that contain biogenic amines such as bone meal, fish meal, poultry meal, meat meal, feather meal, or blood meal.

As used herein, the word "a" or "an" means one or more.

The amine may comprise a primary, secondary and/or tertiary amine group, preferably a primary amine group. When the amine is a polyamine, it is preferably a primary polyamine (all the amine groups are primary amine groups).

Preferably, the amine does not comprise any hydroxy group.

The amine may be acyclic or comprise one or more rings (aromatic and/or alicyclic), preferably is acyclic.

The amine may comprise one or more functional groups other than amine groups. For example, the amine may comprise one or more ether groups; an amine comprising at least two ether groups (identical or different) can be called a polyetheramine. The polyetheramine may be a polyethermonoamine and/or a polyetherpolyamine (in particular a polyetherdiamine), preferably a polyetherpolyamine. The polyetheramine may comprise ethoxy (-OCH₂CH₂-), propoxy (e.g. -OCH₂CH(CH₃)-) and/or butoxy (e.g. - OCH₂CH(CH₂CH₃)-) groups, preferably ethoxy and/or propoxy groups. For example, the polyetheramine may be O,O'-bis(2-aminopropyl) polypropylene glycol-block-polyethylene glycol-block-polypropylene glycol (CAS: 65605-36-9) and/or polypropylene glycol) bis(2-aminopropyl ether) (CAS: 9046-10-0). Polyetheramines are commercially available, for example under the trade name Jeffamine^{®} (by HUNTSMAN).

The amine may be selected from hexylamine, heptylamine, octylamine, nonylamine, decylamine, undecylamine, dodecylamine (preferably laurylamine), tyramine, diethylaniline, phenylethylamine, ethylenediamine, propanediamine (preferably 1,3-), butanediamine (preferably 1,4-), pentanediamine (preferably 1,5-), hexanediamine (preferably 1,6-), heptanediamine (preferably 1,7-), octanediamine (preferably 1,8-), nonanediamine (preferably 1,9-), decanediamine (preferably 1,10-), undecanediamine (preferably 1,11-), dodecanediamine (preferably 1,12-), histamine, tryptamine, isophoronediamine, 4,4'-methylenedianiline, 2-methylbenzene-1,4-diamine, 4,6-diethyl-2-methylbenzene-1,3-diamine, 4,4'-methylenebis(cyclohexylamine), 2,4,6-trimethyl-1,3-phenylenediamine, naphthalene-1,8-diamine, diethylenetriamine, *N*-(3-aminopropyl)butane-1,4-diamine, diaminopropyltetramethylenediamine, tetraethylenepentamine, morpholine, thiomorpholine, quinuclidine, polyetheramines, dimer diamines, and mixtures thereof.

Preferably, the amine is selected from hexylamine, heptylamine, octylamine, nonylamine, decylamine, undecylamine, dodecylamine (preferably laurylamine), propanediamine (preferably 1,3-), butanediamine (preferably 1,4-), pentanediamine (preferably 1,5-), hexanediamine (preferably 1,6-), heptanediamine (preferably 1,7-), octanediamine (preferably 1,8-), nonanediamine (preferably 1,9-), decanediamine (preferably 1,10-), undecanediamine (preferably 1,11-), dodecanediamine (preferably 1,12-), polyethermonoamines, polyetherdiamines, dimer diamines, and mixtures thereof.

In particular, the amine is selected from hexylamine, heptylamine, octylamine, nonylamine, decylamine, undecylamine, dodecylamine (preferably laurylamine), propanediamine (preferably 1,3-), butanediamine (preferably 1,4-), pentanediamine (preferably 1,5-), hexanediamine (preferably 1,6-), heptanediamine (preferably 1,7-), octanediamine (preferably 1,8-), nonanediamine (preferably 1,9-), decanediamine (preferably 1,10-), undecanediamine (preferably 1,11-), dodecanediamine (preferably 1,12-), and mixtures thereof.

Dimer diamines can be obtained by dimerization of fatty acids followed by an amination reaction. Preferably, the dimer diamine comprises between 32 and 48 carbon atoms, more preferably between 34 and 40 carbon atoms, for example 36 carbon atoms. Dimer diamines can be commercially available, for example under the trade name Priamine^{™} (by Cargill).

According to an embodiment, the amine is a bio-based amine, for example selected from tyramine, phenylethylamine, 1,4- butanediamine, 1,5-pentanediamine, histamine, tryptamine, *N*-(3-aminopropyl)butane-1,4-diamine, diaminopropyltetramethylenediamine, and mixtures thereof, in particular 1,5-pentanediamine.

Advantageously, the amine has a boiling point of more than 130°C, preferably more than 150°C, even more preferably more than 170°C. The boiling point may be measured by using a distillation setup, the boiling point being the temperature at which the liquid starts to boil and vapors rise to the condenser.

The amine may have a molecular weight comprised between 50 g/mol and 5000 g/mol, preferably between 60 g/mol and 1000 g/mol, more preferably between 100 g/mol and 500 g/mol, in particular between 100 g/mol and 300 g/mol.

The amine content in the mixture (M1) may be such that the molar equivalent concentration amine / polyhydroxyalkanoate is of at least 0.8 mmol/kg, preferably at least 2 mmol/kg, more preferably at least 3 mmol/kg. For example, the molar equivalent ratio amine / polyhydroxyalkanoate may be comprised between 0.8 mmol/kg and 400 mmol/kg, preferably between 2 mmol/kg and 200 mmol/kg, more preferably between 3 mmol/kg and 150 mmol/kg. The molar equivalent concentration amine / polyhydroxyalkanoate is defined as being equal to the molar equivalent number of amine groups of the amine introduced in the mixture (M1) with respect to one kilogram of polyhydroxyalkanoate introduced in the mixture (M1).

The molar equivalent number of amine groups of the amine can be calculated as the number of amine groups multiplied by the number of moles of the amine. For example, if the amine is a diamine, its number of amine groups is 2 and its number of moles can be calculated by dividing the mass (grams) of amine introduced by its molecular weight (g/mol).

### Additional ingredients

The process according to the invention may further implement one or more additional ingredients other than the polyhydroxyalkanoate and the amine. The additional ingredient(s) may be implemented at any time during the process, for example, prior to, during and/or after the melting step of the mixture (M1), more conveniently prior to the melting step of the mixture (M1).

Examples of additional ingredients are tackifying resins, plasticizers, ultraviolet (UV) stabilizers (or antioxidants), nucleating agents, waxes, surfactants, pigments, fluorescent agents, fillers, rheological agents, polymers (other than the polyhydroxyalkanoate), etc.

The total content of additional ingredients may be up to 99 % by weight, preferably up to 95 % by weight, more preferably up to 90 % by weight, with respect to the total weight of the additional ingredients, polyhydroxyalkanoate and amine.

The process according to the invention may further implement a tackifying resin, for example selected from:
- natural and modified rosin, such as gum rosin, wood rosin, tall-oil rosin, distilled rosin, hydrogenated rosin, dimerized rosin, polymerized rosin,
- glycerol and pentaerythritol esters of natural and modified rosins, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- lignin and derivatives thereof (such as lignosulfonates),
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers, which may be phenolic-modified,
- aromatic petroleum hydrocarbon resins (C9), resulting from the polymerization of C9-hydrocarbon monomers, which may be phenolic-modified (such as styrene phenolic resin),
- petroleum hydrocarbon resins (C5/C9), resulting from the polymerization of a blend of aliphatic C5- and aromatic C9-hydrocarbon monomers, which may be phenolic-modified,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, which may be phenolic-modified,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

Advantageously, the tackifying resin is selected from lignin and derivatives thereof and phenolic-modified tackifying resins, preferably from phenolic-modified tackifying resins, for example selected from phenolic-modified terpene resins (such as those resulting from the condensation, in an acidic medium, of a terpene and a phenol), phenolic-modified C5-hydrocarbon resins, phenolic-modified C9-hydrocarbon resins (such as α-methylstyrene phenolic resin), phenolic-modified C5/C9-hydrocarbon resin, phenolic-modified DCPD resin (optionally obtained from C9-hydrocarbon monomers and/or aliphatic C5-hydrocarbon monomers), and mixtures thereof, more preferably from phenolic-modified terpene resins, phenolic-modified C9-hydrocarbon resins, and mixtures thereof, in particular from phenolic-modified terpene resins and mixtures thereof.

The tackifying resin content may be up to 70 % by weight, preferably up to 60 % by weight, with respect to the total weight of the additional ingredients, polyhydroxyalkanoate and amine.

The process according to the invention may further implement a plasticizer, for example selected from naphthenic oils, paraffinic oils, citrate-based plasticizers, bio-based polymeric ester plasticizers, olefin oligomers, polyethers of glycerol and polyglycol(s), and mixtures thereof.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

As examples of citrate-based plasticizers, mention may be made of citric acid esters and acylated citric acid esters, for example Citroflex^{®} A-2, Citroflex^{®} A-4, Citroflex^{®} A-6,Citroflex^{®} B-6, Citroflex^{®} C-2, Citroflex^{®} C-4, etc. available from Vertellus.

The bio-based polymeric ester plasticizer can be an aliphatic polyester comprising repeating units derivable from a substituted or unsubstituted aliphatic diacid, repeating units derivable from a substituted or unsubstituted aliphatic diol, and one or two terminator units derivable from a substituted or unsubstituted aliphatic mono-alcohol, for example as described in WO2011100101. In particular, the bio-based polymeric ester plasticizer can be obtained from the condensation of a dicarboxylic acid selected from succinic acid, glutaric acid, adipic acid, and mixtures thereof, with a diol selected from 1,2-propanediol, 1,3 propanediol, and mixture thereof, along with at least a C8 and/or C10 mono-alcohol.

Commercially available examples of bio-based polymeric ester plasticizers are HallGreen^{®} R-8040, HallGreen^{®} R-8010 and HallGreen^{®} R-9010, from Hallstar.

By "olefin oligomers", it is intended polyolefins having a low weight average molecular weight, preferably between about 100 and about 10000 g/mol. The weight average molecular weight can be measured by size exclusion chromatography, preferably with a polystyrene calibration.

In the present text, by "about X", it is intended more or less 10% the value of X.

As examples of olefin oligomers, mention may be made of polypropylene, polybutene, hydrogenated polyisopropene and hydrogenated polybutadiene.

The polyether of glycerol and polyglycol(s) may be polyoxyethylene glyceryl ether (CAS: 31694-55-0), polyoxypropylene glyceryl ether (CAS: 25791-96-2), polyoxypropylene-polyoxyethylene glycerol ether (CAS: 9082-00-2) and/or glycerol ethoxylate-co-propoxylate triol (CAS: 51258-15-2).

The plasticizer content may be up to 40 % by weight, preferably up to 30 % by weight, with respect to the total weight of the additional ingredients, polyhydroxyalkanoate and amine.

The process according to the invention may further implement a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered phenols and multifunction phenols, such as sulfur and phosphorous-containing phenols.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

The UV stabilizer (or antioxidant) content may be up to 5 % by weight, preferably up to 3 % by weight, with respect to the total weight of the additional ingredients, polyhydroxyalkanoate and amine.

The process according to the invention may further implement a nucleating agent.

As examples of nucleating agents, mention may be made of pentaerythritol and zinc phenylphosphonate.

The nucleating agent content may be up to 10 % by weight, preferably up to 5 % by weight, with respect to the total weight of the additional ingredients, polyhydroxyalkanoate and amine.

The process according to the invention may further implement a wax, such as a polyethylene wax, a paraffin wax, a Fischer-Tropsch wax and/or an EVA wax.

By "polyethylene wax", it is intended a polyethylene homopolymer, in particular low-density or high-density polyethylene homopolymer. The polyethylene wax generally has a number average molecular weight up to 10000 g/mol. The number average molecular weight can be measured by size exclusion chromatography (or SEC), preferably with a polystyrene calibration.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "EVA wax", it is intended oligomeric polymer compounds that are prepared via a process comprising the co-polymerization of ethylene monomers and vinyl acetate monomers and that have the following properties: (a) solid at room temperature (e.g. 23°C); (b) low melting point (e.g. less than 100°C); and (c) insoluble in water. The EVA copolymers of the EVA wax may be functionalized or modified in any possible manner.

The wax content may be up to 10 % by weight, preferably up to 6 % by weight, with respect to the total weight of the additional ingredients, polyhydroxyalkanoate and amine.

The process according to the invention may further implement a surfactant.

The surfactant may be selected from cationic, anionic, amphoteric and/or nonionic surfactants. For example, the surfactant may be selected from sorbitan derivatives (e.g. polysorbates, sorbitan esters such as sorbitan monolaurate), ethoxylated alcohols (e.g. ethoxylated fatty alcohols, octylphenol ethoxylate, nonylphenol ethoxylate), ethoxylated fatty acids, fatty esters (e.g. polyethylene glycol dioleate, glycerol fatty esters such as glycerol mono and/or dioleate), sulfosuccinate salts (e.g. dioctyl sodium sulfosuccinate), sulfosuccinate esters, alkyl sulfates, alkyl ether sulfates, alkyl sulfonates, ethoxy-propoxy copolymers, phosphate monoesters, phosphate diesters, phosphonate monoesters, phosphonate diesters, and mixtures thereof.

The surfactant content may be up to 30 % by weight, preferably up to 15 % by weight, with respect to the total weight of the additional ingredients, polyhydroxyalkanoate and amine.

The process according to the invention may further implement a pigment.

The pigment may be selected from organic pigments, inorganic pigments, and mixtures thereof. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments, thioindigo-based pigments, quinophthalone-based pigments, titanium dioxide, carbon black, manganese ferrite, and mixtures thereof.

The pigment content may be up to 5 % by weight with respect to the total weight of the additional ingredients, polyhydroxyalkanoate and amine.

The process according to the invention may further implement a fluorescent agent (in particular ultraviolet or infrared) such as 2-(6-hydroxy-3-oxo-(3H)-xanthen-9-yl) benzoic acid, disodium 6-hydroxy-3-oxo-9-xanthene-o-benzoate and/or 8-hydroxy-1,3,6-pyrenetrisulfonic acid trisodium salt.

The fluorescent agent content may be up to 3 % by weight, preferably up to 1 % by weight, with respect to the total weight the additional ingredients, polyhydroxyalkanoate and amine.

The process according to the invention may further implement a filler. As examples of fillers, mention may be made of clays (in particular talc), quartz, carbonated fillers (in particular calcium carbonate, which may be coated with fatty acid (the latter being preferably precipitated)), kaolins, gypsum, silica, mica, wollastonite, feldspar, aluminum silicate, alumina, hydrated alumina, boron nitride, glass microspheres, ceramic microspheres, thermoplastic microspheres, lignocellulosic fiber, ground wood, ground sea shells, ground pistachio shell flower, rice husks, crushed oyster shells, leather, etc..

The filler content may be up to 70 % by weight, preferably up to 10 % by weight, with respect to the total weight of the additional ingredients, polyhydroxyalkanoate and amine.

The process according to the invention may further implement a rheological agent.

The rheological agent may be selected from thixotropic agents, for example from:
- PVC plastisols, corresponding in particular to a suspension of PVC in a plasticizer that is miscible with PVC, obtained in situ by heating to temperatures ranging from 60°C to 80°C. These plastisols may be those described in particular in the publication Polyurethane Sealants, Robert M. Evans, ISBN 087762-998-6,
- fumed silica (hydrophilic and/or hydrophobic),
- urea derivatives derived from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil, such as THIXCIN^{®} R sold by ELEMENTIS,
- amide waxes, preferably micronized amide waxes, such as Crayvallac^{®} SLT sold by Arkema,
- beeswaxes (in particular of CAS 8006-40-4 et/ou 8012-89-3),
- carnauba wax, and
- mixtures thereof.

Amide waxes are preferably micronized, i.e. they have an average particle size of less than 1 mm. Advantageously, the amide waxes have an average particle size of less than 500 µm, preferably less than 100 µm, more preferably less than 10 µm.

The rheological agent content may be up to 20 % by weight, preferably up to 10 % by weight, with respect to the total weight of the additional ingredients, polyhydroxyalkanoate and amine.

The process according to the invention may further implement a polymer other than the polyhydroxyalkanoate. The polymer may be selected from polyamides, polyurethanes, polyureas, poly(amide-enamine)s, polyanhydrides, polyesters, thermoplastic starch, and mixtures thereof, preferably from polyesters, thermoplastic starch, and mixtures thereof, more preferably from polyesters and mixtures thereof. The polyester is preferably an aliphatic polyester such as polylactic acid, poly(lactic acid-co-glycolic acid), polycaprolactone and/or poly(butylene succinate-co-butylene adipate), in particular polycaprolactone and/or polylactic acid.

The number average molecular weight of the polymer may be comprised between 4000 g/mol and 1000000 g/mol. The number average molecular weight of the polymer can be measured by size exclusion chromatography, preferably with a polystyrene calibration.

The polymer content may be up to 99 % by weight, preferably up to 90 % by weight, with respect to the total weight of the additional ingredients, polyhydroxyalkanoate and amine.

### Other features of the process according to the invention

Advantageously, at least 50 % by weight of the ingredients implemented in the process according to the invention are bio-based and/or compostable, with respect to the total weight of said ingredients, preferably at least 70 % by weight. By "bio-based", it is intended materials that are obtained from biological resources (e.g. plants, microorganisms, animals, etc.) and may have undergone chemical modifications. Compostability may be evaluated following the standard ASTM D6400.

Advantageously, the process according to the invention does not implement a solvent. Solvents are well known to the skilled person and are used to dissolve the ingredients implemented. Solvents include, for example, water, ethanol, isopropanol, butanol, ethyl acetate, butyl acetate, acetone, butanone, methyl isobutyl ketone, tetrahydrofuran, dioxane, N,N-dimethylformamide, dimethyl sulfoxide, acetonitrile, dichloromethane, chloroform, cyclohexane, benzene, toluene, xylene, etc. Thus, the process according to the invention is advantageously implemented without the addition of free water, i.e. other than that inherently present in the ingredients implemented.

The process according to the invention may further comprise a vacuum degassing step, in particular after the melting step. The vacuum degassing step may be carried out at a vacuum level of 1-600 mbar (i.e. achieve pressure 1 - 600 mbar below atmospheric pressure).

Advantageously, the process according to the invention further comprises a discharging step after the melting step. The discharging step is preferably carried out directly after the melting step (without an in-between cooling step). When a screw extruder is used to perform the melting step, the discharging step can conveniently be performed with the same screw extruder, making it possible to have a continuous process; in particular, the mixture can be molten in the screw extruder and then discharged by the screw extruder which forces it out (extrudes it) through a die of the desired shape.

Advantageously, the process according to the invention further comprises a cooling step after the melting step. The cooling step can be performed by any means usually implemented by the skilled person, for example air-cooling. The cooling step advantageously decreases the temperature of the mixture (M2) (or a derivative thereof such as after adding one or more additional ingredients to the mixture (M2) and/or after vacuum degassing the mixture (M2)) to less than 50°C, preferably between 0°C and 35°C, more preferably between 18°C and 25°C. When the process according to the invention comprises an extrusion step, the cooling step is preferably performed after the extrusion step.

### Embodiments of the process according to the invention

According to an embodiment, the process according to the invention comprises (in particular consists of):
- melting, preferably in a screw extruder, a mixture (M1) at a temperature comprised between 110°C and 250°C to provide a mixture (M2), wherein the mixture (M1) comprises (in particular consists of):
   ∘ a polyhydroxyalkanoate comprising more than 70 mol% of repeating units derived from 3-hydroxypropionic acid, 3-hydroxybutyric acid, 3-hydroxyvaleric acid, 4-hydroxybutyric acid and/or 5-hydroxyvaleric acid,
   ∘ an amine, the amine preferably comprising a primary amine group and preferably having a boiling point of more than 170°C, and
   ∘ optionally one or more additional ingredients selected from tackifying resins, plasticizers, ultraviolet (UV) stabilizers (or antioxidants), nucleating agents, waxes, surfactants, pigments, fluorescent agents, fillers, rheological agents, polymers, and mixtures thereof,
   ∘ the molar equivalent concentration amine / polyhydroxyalkanoate being comprised between 0.8 mmol/kg and 400 mmol/kg,
   then
   - optionally, adding to the mixture (M2) one or more additional ingredients selected from tackifying resins, plasticizers, ultraviolet (UV) stabilizers (or antioxidants), nucleating agents, waxes, surfactants, pigments, fluorescent agents, fillers, rheological agents, polymers, and mixtures thereof,
   - optionally, performing a vacuum degassing step,
   - preferably, performing a discharging step, and
   - performing a cooling step to a temperature of less than 50°C.

The features of the process according to the invention described hereinbefore apply to this embodiment, including the embodiments and preferred features.

In particular, the process according to the invention is a continuous process comprising (in particular consists of):
- melting, in a screw extruder, a mixture (M1) at a temperature comprised between 160°C and 200°C to provide a mixture (M2), wherein the mixture (M1) comprises (in particular consists of):
   ∘ a polyhydroxyalkanoate comprising more than 90 mol% of repeating units derived from 3-hydroxypropionic acid, 3-hydroxybutyric acid, 3-hydroxyvaleric acid, 4-hydroxybutyric acid and/or 5-hydroxyvaleric acid,
   ∘ an amine, the amine preferably comprising a primary amine group and preferably having a boiling point of more than 170°C, and
   ∘ optionally one or more additional ingredients selected from tackifying resins, plasticizers, ultraviolet (UV) stabilizers (or antioxidants), nucleating agents, waxes, surfactants, pigments, fluorescent agents, fillers, rheological agents, polymers, and mixtures thereof,
   ∘ the molar equivalent concentration amine / polyhydroxyalkanoate being comprised between 3 mmol/kg and 150 mmol/kg,
   then
- optionally, adding to the mixture (M2) one or more additional ingredients selected from tackifying resins, plasticizers, ultraviolet (UV) stabilizers (or antioxidants), nucleating agents, waxes, surfactants, pigments, fluorescent agents, fillers, rheological agents, polymers, and mixtures thereof,
- optionally, performing a vacuum degassing step, then
- performing a discharging step, then
- performing a cooling step to a temperature between 18°C and 25°C.

The features of the process according to the invention described hereinbefore apply to this embodiment, including the embodiments and preferred features.

Advantageously, the number average molecular weight of the polyhydroxyalkanoate in the mixture (M2) is at least 5 % lower than the number average molecular weight of the polyhydroxyalkanoate introduced in the mixture (M1), preferably at least 10 % lower, more preferably at least 20 % lower.

Advantageously, the mixing torque of the mixture (M2) is at least 5 % lower than the same mixture not comprising the amine processed under the same conditions, preferably at least 10 % lower, more preferably at least 15 % lower. The mixing torque can be recorded at 180°C by a mixing device, for example a screw extruder.

### Composition obtainable by the process according to the invention

The invention also relates to a composition obtainable by the process according to the invention as described hereinbefore (including the embodiments and preferred features). Said composition thus corresponds to the mixture (M2) or a derivative thereof (such as derivatives obtained after adding one or more additional ingredients to the mixture (M2) or after vacuum degassing the mixture (M2)).

The polyhydroxyalkanoate content may be comprised between 1 % and 99.99 % by weight with respect to the total weight of the composition according to the invention, preferably between 5 % and 99.98 % by weight, more preferably between 10 % and 99.97 % by weight. The total amount of polyhydroxyalkanoate can be determined as the amount of polyhydroxyalkanoate introduced in the mixture (M1) and introduced in the mixture (M2), but preferably no polyhydroxyalkanoate is introduced in the mixture (M2).

Preferably, the composition is obtainable by the process according to the invention implementing an amine having a boiling point of more than 170°C in the mixture (M1). Such amine may be selected from octylamine, nonylamine, decylamine, undecylamine, dodecylamine (preferably laurylamine), tyramine, diethylaniline, phenylethylamine, pentanediamine (preferably 1,5-), hexanediamine (preferably 1,6-), heptanediamine (preferably 1,7-), octanediamine (preferably 1,8-), nonanediamine (preferably 1,9-), decanediamine (preferably 1,10-), undecanediamine (preferably 1,11-), dodecanediamine (preferably 1,12-), histamine, isophoronediamine, 4,4'-methylenedianiline, 2-methylbenzene-1,4-diamine, 4,6-diethyl-2-methylbenzene-1,3-diamine, 4,4'-methylenebis(cyclohexylamine), 2,4,6-trimethyl-1,3-phenylenediamine, naphthalene-1,8-diamine, diethylenetriamine, N-(3-aminopropyl)butane-1,4-diamine, diaminopropyltetramethylenediamine, tetraethylenepentamine, polyethermonoamines, polyetherdiamines, dimer diamines, and mixtures thereof. Preferably, such amine is selected from octylamine, nonylamine, decylamine, undecylamine, dodecylamine (preferably laurylamine), pentanediamine (preferably 1,5-), hexanediamine (preferably 1,6-), heptanediamine (preferably 1,7-), octanediamine (preferably 1,8-), nonanediamine (preferably 1,9-), decanediamine (preferably 1,10-), undecanediamine (preferably 1,11-), dodecanediamine (preferably 1,12-), polyethermonoamines, polyetherdiamines, dimer diamines, and mixtures thereof.

The composition according to the invention may comprise one or more of the additional ingredients as described hereinbefore (including the embodiments and preferred features). In particular, the additional ingredients may be selected from tackifying resins, plasticizers, UV stabilizers (or antioxidants), nucleating agents, waxes, surfactants, pigments, fluorescent agents, fillers, rheological agents, polymers, and mixtures thereof, which are described hereinbefore.

The total content of additional ingredients may be up to 99 % by weight, preferably up to 95 % by weight, more preferably up to 90 % by weight, with respect to the total weight of the composition according to the invention.

The tackifying resin content may be up to 70 % by weight, preferably up to 60 % by weight, with respect to the total weight of the composition.

The plasticizer content may be up to 40 % by weight, preferably up to 30 % by weight, with respect to the total weight of the composition.

The UV stabilizer (or antioxidant) content may be up to 5 % by weight, preferably up to 3 % by weight, with respect to the total weight of the composition.

The nucleating agent content may be up to 10 % by weight, preferably up to 5 % by weight, with respect to the total weight of the composition.

The wax content may be up to 10 % by weight, preferably up to 6 % by weight, with respect to the total weight of the composition.

The surfactant content may be up to 30 % by weight, preferably up to 15 % by weight, with respect to the total weight of the composition.

The pigment content may be up to 5 % by weight with respect to the total weight of the composition.

The fluorescent agent content may be up to 3 % by weight, preferably up to 1 % by weight, with respect to the total weight the composition.

The filler content may be up to 70 % by weight, preferably up to 10 % by weight, with respect to the total weight of the composition.

The rheological agent content may be up to 20 % by weight, preferably up to 10 % by weight, with respect to the total weight of the composition.

The polymer content may be up to 99 % by weight, preferably up to 90 % by weight, with respect to the total weight of the composition.

Advantageously, the composition according to the invention comprises at least 50 % by weight of bio-based and/or compostable ingredients with respect to the total weight of the composition, preferably at least 70 % by weight. Compostability may be evaluated following the standard ASTM D6400.

Advantageously, the composition according to the invention does not comprise a solvent. Solvents are well known to the skilled person and are used to dissolve the ingredients implemented. Solvents include, for example, water, ethanol, isopropanol, butanol, ethyl acetate, butyl acetate, acetone, butanone, methyl isobutyl ketone, tetrahydrofuran, dioxane, N,N-dimethylformamide, dimethyl sulfoxide, acetonitrile, dichloromethane, chloroform, cyclohexane, benzene, toluene, xylene, etc.

The composition according to the invention may be under the form of a thermoplastic resin, a hot-melt adhesive or a polymer blend, preferably a hot-melt adhesive.

According to a first embodiment, the composition according to the invention is under the form of a hot-melt adhesive.

The polyhydroxyalkanoate content may be comprised between 30 % and 90 % by weight with respect to the total weight of the hot-melt adhesive, preferably between 40 % and 70 % by weight.

The polyhydroxyalkanoate may have a melt flow index of at least 30 g/10 min. The melt flow index can be measured at 165 °C and 2.16 kg, for example according to ASTM D1238.

Preferably, the hot-melt adhesive comprises a tackifying resin, in particular a phenolic-modified tackifying resin. The tackifying resin content may be comprised between 10 % and 70 % by weight, preferably between 30 % and 60 % by weight, with respect to the total weight of the hot-melt adhesive.

According to a second embodiment, the composition according to the invention is under the form of a polymer blend comprising a polymer (other than the polyhydroxyalkanoate), in particular polycaprolactone and/or polylactic acid.

The polyhydroxyalkanoate content may be comprised between 1 % and 99 % by weight with respect to the total weight of the polymer blend, preferably between 10 % and 90 % by weight.

The polymer content may be comprised between 1 % and 99 % by weight, preferably between 10 % and 90 % by weight, with respect to the total weight of the polymer blend.

According to a third embodiment, the composition according to the invention is under the form of a thermoplastic resin.

### Use of the composition according to the invention

The invention further relates to the use of the composition according to the invention as a thermoplastic resin, a hot-melt adhesive or a polymer blend, preferably a hot-melt adhesive.

The composition according to the invention is as described above, including the embodiments and preferred features.

According to a first embodiment, the composition according to the invention is a hot-melt adhesive. The hot-melt adhesive is as described above (including the embodiments and preferred features).

The hot-melt adhesive can be used for bonding substrates together, or as a coating on the surface of a substrate. The hot-melt adhesive is preferably applied on a substrate by extrusion.

The substrates to be bonded may be different or of same nature, with various forms. For example, the substrates may be each a layer (or film), strands or fluff.

Preferably, each substrate may be chosen independently from one another among nonwoven fabric, tissue, absorbent fluff, super absorbent polymer (SAP), composite material, plastics which may be elastomeric or non-elastomeric (for example styrene block copolymers, polyurethanes and/or polyolefins), paper, paperboard, cardboard, and any mixture thereof, preferably from paper, paperboard, cardboard, and any mixture thereof.

The surface to be coated may comprise nonwoven fabric (preferably hydrophilic), tissue, absorbent fluff, super absorbent polymer, composite material, plastics which may be elastomeric or non-elastomeric (for example styrene block copolymers, polyurethanes and/or polyolefins), paper, paperboard, cardboard, and any mixture thereof, preferably paper, paperboard, cardboard, and any mixture thereof.

The amount of coated hot melt adhesive by surface unit can vary in a very large range, for example from 0.1 to 500 g/m², depending on the substrates implemented.

According to a second embodiment, the composition according to the invention is a polymer blend comprising a polymer (other than the polyhydroxyalkanoate). The polymer blend is as described above (including the embodiments and preferred features).

The polymer blend can be used to manufacture a film, for example for a packaging.

According to a third embodiment, the composition according to the invention is a thermoplastic resin. The thermoplastic resin is as described above (including the embodiments and preferred features).

The thermoplastic resin can be used to manufacture a film, fiber or a molded article.

### Article

Finally, the invention relates to an article comprising the composition according to the invention.

The article may be obtained thanks to the process according to the invention.

According to a preferred embodiment, the composition according to the invention is a hot-melt adhesive and bonds at least two substrates of the article according to the invention (preferably, an assembly product). The at least two substrates may be joined adhesively by a layer of the hot-melt adhesive, in sandwich between the two substrates, and/or by spots of the hot-melt adhesive. In particular, the article may be obtained by extruding the hot-melt adhesive on a surface of a first substrate, then contacting the coated surface of the first substrate with a surface of a second substrate (so as to form an adhesive joint bonding the two substrates), then cooling the hot-melt adhesive (preferably at a temperature between 18°C and 25°C).

The substrates are preferably as described above for the use of the composition according to the invention (including the embodiments and preferred features), in particular paper, paperboard, cardboard, and any mixture thereof.

The article may be a disposable diaper, a sanitary napkin, an absorbent pad, a bandage, a surgical sheet, a tape, a label, toilet tissues, paper towels, a cardboard box, a book or a package.

Unless otherwise stated, standards mentioned throughout the present application are those in effect on the date the application is filed.

All the embodiments described above can be combined with each other. In particular, the various aforementioned ingredients in the composition, and in particular the preferred embodiments, can be combined with each other.

### Description of the figures

Figure 1 is a graph comparing the number average molecular weight (Mn) of polyhydroxyalkanoate mixtures obtained under different processing conditions detailed in Example 2 below.
Figure 2 is a graph comparing the mixing torque of polyhydroxyalkanoate mixtures after 1 min, 3 min and 5 min of mixing at 180°C and 100 RPM, depending on the HMDA (or 1,6HD) concentration (the empty symbols correspond to 1,6 HD and the filled symbols correspond to reference (0 mM) or to HMDA (above 0 mM)). Details are provided in Example 2 below.
Figure 3 is a graph comparing the mixing torque of polyhydroxyalkanoate (ENMAT Y1000) mixtures after 1 min, 3 min and 5 min of mixing at 180°C and 100 RPM, depending on PMDA concentration. Details are provided in Example 3 below.
Figure 4 is a graph comparing the mixing torque of polycaprolactone (Capa^{®} 6800) mixtures after 1 min, 3 min and 5 min of mixing at 180°C and 100 RPM, depending on HMDA concentration. Details are provided in Example 3 below.
Figure 5 is a graph comparing the mixing torque of polyhydroxyalkanoate mixtures after 1 min, 3 min and 5 min of mixing at 180°C and 100 RPM, depending on the amine implemented. Details are provided in Example 4 below.
Figure 6 shows photographs of cardboard substrates after fiber tear test; left corresponds to comparative composition HM1, and right to composition HM2 according to the invention. Details are provided in Example 5 below.
Figure 7 shows images by Scanning Electron Microscopy at 1000x magnification of two polymer blends; left corresponds to comparative polymer blend PB1, and right to polymer blend PB2 according to the invention. Details are provided in Example 6 below.

The following examples illustrate the invention without limiting it.

### EXAMPLES

### Example 1: Materials and methods

### Materials

The following materials were implemented:
- ENMAT Y1000P (by TianAn Biologic Materials): Poly(3-hydroxybutyric acid-co-3-hydroxyvaleric acid) (CAS: 80181-31-3) under pellet form having a DSC melting point comprised between 170°C and 176°C, polyhydroxyalkanoate,
- ENMAT Y1000 (by TianAn Biologic Materials): Poly(3-hydroxybutyric acid-co-3-hydroxyvaleric acid) (CAS: 80181-31-3) under powder form, polyhydroxyalkanoate,
- 1,6-hexanediol (by Sigma Aldrich): CAS: 629-11-8,
- hexamethylene diamine (by Sigma Aldrich): CAS: 124-09-4,
- 1,5-pentanediamine (by Sigma Aldrich): CAS: 492-94-2,
- Priamine^{™} 1075 (by Cargill): dimer diamine having an amine value of about 205 mg KOH/g,
- 1,10-decanediamine (by Sigma Aldrich): CAS: 646-25-3,
- Jeffamine^{®} ED-600 (by HUNTSMAN): polyether primary diamine (CAS: 65605-36-9) having a molecular weight of about 600 g/mol,
- Jeffamine^{®} D-400 (by HUNTSMAN): polyether primary diamine (CAS: 9046-10-0) having a molecular weight of about 430 g/mol,
- laurylamine (by Sigma Aldrich): dodecylamine (CAS: 124-22-1),
- SYLVARES^{™} TP300 (by Kraton): terpene phenolic resin having a softening point of about 112°C, tackifying resin,
- Capa^{®} 6800 (by Ingevity): linear polyester derived from caprolactone monomer (CAS: 24980-41-4) having a mean molecular weight of about 80000 g/mol.

### Number average molecular weight (Mn)

The number average molecular weight was determined after extrusion by ¹H NMR (Nuclear Magnetic Resonance) end group analysis. The samples were prepared by grinding to a fine powder, and then dissolving ~10 mg of sample in -0.65 mL of CDCl₃ in 4 mL vials over 12 hours at 50 °C.

Three types of end groups were identified by ¹H NMR:
- Methine hydrogen of hydroxide end group OOCCH₂(OHCH)CH₃ (near 4.2 ppm)
- Methine hydrogen of trans-olefinic end group OOCCH=CHCH₃ (near 7.0 ppm)
- Methine hydrogen of cis-olefinic end group OOCCH=CHCH₃ (near 6.4 ppm).

To calculate Mn, the combined signal of all end groups was compared to the signal in the polyhydroxyalkanoate chain structure, a methylene hydrogen signal near 2.5 ppm (OOCCH₂(CHCH₃)), adjusted to the number of hydrogens in each group.

### Mixing torque

The mixing torque was recorded by the Xplore Instruments micro compounder MC-15 during mixing at different time intervals after starting mixing.

The mixing torque is related to viscosity: the higher the mixing torque, the higher the viscosity.

### Fiber tear adhesion

The composition to be tested was immediately extruded onto a cardboard substrate and a second cardboard substrate was placed upon the first after 10 seconds. Then, the samples were rolled twice with a standard 2 kg FINAT test roller at the speed of about 50 mm/s to obtain intimate contact between the composition and the cardboard substrates. The bonded samples were conditioned for 72 hours at 23°C ± 2°C, 50 % RH (relative humidity) ± 5% RH.

After conditioning, each substrate was held in a T-peel configuration and rapidly separated by hand at room temperature (23°C ± 2°C). The surface area of the torn surface demonstrating substrate failure of the cardboard (fiber tear) was measured and averaged across 7 samples.

### Peak melting temperature and melting enthalpy

The peak melting temperature and melting enthalpy were determined by DSC (Differential Scanning Calorimetry). The analysis was performed in a heat/cool/heat program in the range -30 °C to 220 °C at a heating rate of 20K/min and cooling rate of 20K/min. The melting response was recorded for the second heating scan.

### Average droplet diameter

The composition to be tested was extruded and collected. Microscopy samples were sectioned by a cryo-microtome and then treated with gold sputter coating. The samples were imaged with a Hitachi SU8000 Scanning Electron Microscope. The particle size apparent from the sections was quantified by the particle size analysis function of imaged software.

### Example 2: Properties of polyhydroxyalkanoates obtained from different processes

Processing was performed on a preheated Xplore Instruments micro compounder MC-15 by mixing the ingredient(s) at a screw speed of 100 RPM (revolutions per minute) in recirculation mode. Four different processes were carried out:
◊ Standard processing reference: ENMAT Y1000P alone was added to the compounder and then mixed (settings: 180 °C/100 RPM for 5 minutes)
   - Standard processing with HMDA: ENMAT Y1000P and hexamethylene diamine (HMDA) were simultaneously added to the compounder and then mixed (settings: 180 °C/100 RPM for 5 minutes)
★ Standard processing with 1,6 HD: ENMAT Y1000P and 1,6-hexanediol (1,6HD) were simultaneously added to the compounder and then mixed (settings: 180 °C/100 RPM for 5 minutes)
∘ Aggressive processing: ENMAT Y1000P alone was added to the compounder and then mixed (settings: 200 °C/100 RPM for 20 minutes)

The material was then extruded, air cooled rapidly, and collected.

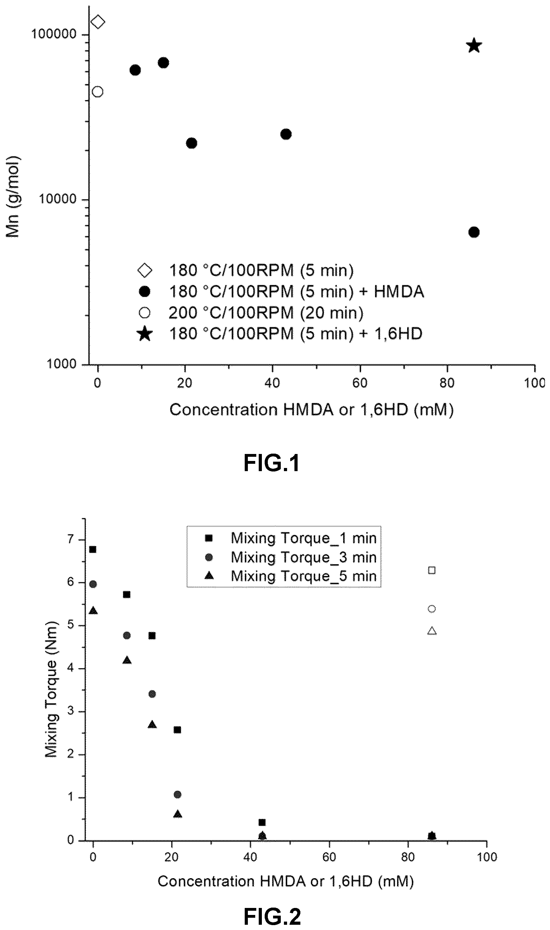

The Mn and mixing torque were determined according to Example 1 and the results appear in Figures 1 and 2 respectively (in Figure 2, the empty symbols correspond to standard processing with 1,6 HD and the filled symbols correspond to standard processing reference (0 mM) or to standard processing with HMDA). The results of the ¹H NMR end group analysis performed for determining the Mn are indicated in Table 1.

**Table 1: ¹H NMR end group analysis, values being mmol end groups per mol ENMAT Y1000P chain units**

| Processing | Methine hydrogen of hydroxide end group | Methine hydrogen of trans-olefinic end group | Methine hydrogen of cis-olefinic end group | Total end groups |
|---|---|---|---|---|
| Standard reference | 1 | 0.7 | 0 | 1.7 |
| Standard with 86 mM 1,6 HD | 1.76 | 0.61 | 0 | 2.37 |
| Standard with 86 mM HMDA | 12.36 | 18.80 | 0.86 | 32.02 |

Under standard processing conditions, Mn tends to decrease with increasing HMDA (•) (Figure 1), and similarly mixing torque, related to viscosity, decreased with increasing HMDA (Figure 2). The results show that it is possible to select the desired molecular weight and viscosity with the inventive process through controlling the additive amine concentration. Furthermore, the process affords control of Mn over a very wide range, about 7000 g/mol to about 120000 g/mol in this example.

Aggressive processing conditions (∘) decrease Mn as well, likely due to polyhydroxyalkanoate thermal degradation through known pathways such as thermolysis. However, standard processing, even with low HMDA concentration (≤20 mM), can achieve similar or lower Mn with shorter processing time and lower temperature. Furthermore, higher HMDA concentration can achieve much lower Mn than can be achieved through aggressive processing conditions. The results show that the inventive process efficiently decreases Mn and requires less process time and temperature.

At the same concentration (86 mM), substituting the amine for an analogous alcohol (1,6HD) does not effectively decrease Mn (★ Figure 1), nor mixing torque (Figure 2).

Furthermore, ¹H HMR results show that reacting polyhydroxyalkanoate with HMDA under the above conditions produces different products than with and without 1,6HD (Table 1). For example, no cis-olefinic end group was detected for the standard reference or with 86 mM 1,6 HD.

It follows that the inventive process implementing an amine occurs efficiently, whereas replicating the process with an alcohol instead of an amine does not occur efficiently under the same conditions.

Finally, the inventive process appears to occur shortly, which is useful for scaling the inventive process and formulations to larger processing equipment (twin screw extruders) with shorter residence time. In Figure 2, the mixing torque for all samples is less than the control sample (no HMDA), and the sample with 86 mM 1,6HD at the same time interval.

### Example 3: Effect on polyhydroxyalkanoate (invention) and polycaprolactone (comparative)

Processing was performed on a preheated Xplore Instruments micro compounder MC-15 by mixing the polymer (ENMAT Y1000 or Capa^{®} 6800) and amine at a screw speed of 100 RPM in recirculation mode for 5 minutes at setpoint temperature of 180°C. The amine mixed with ENMAT Y1000 was 1,5-pentanediamine (PMDA) and the amine mixed with Capa^{®} 6800 was HMDA. The material was then extruded, air cooled rapidly, and collected.

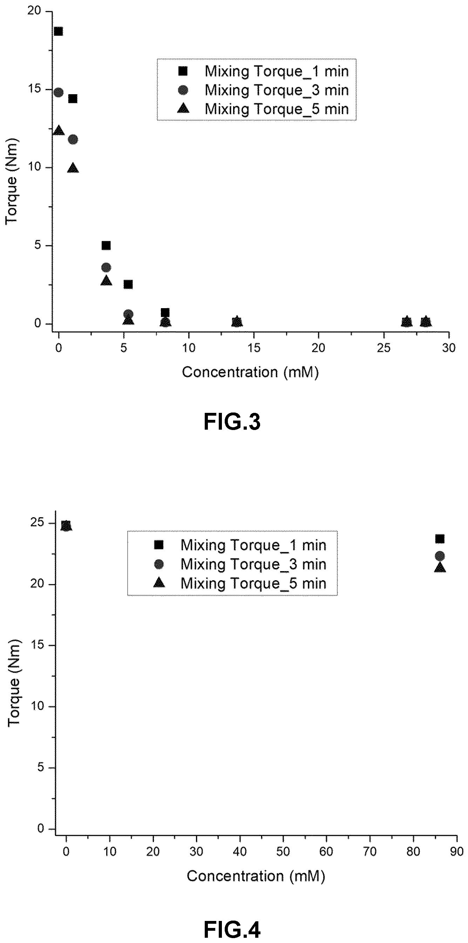

The mixing torque was determined according to Example 1 and the results appear in Figure 3 for ENMAT Y1000 and in Figure 4 for Capa^{®} 6800.

Mixing torque (related to viscosity) of polyhydroxyalkanoate (ENMAT Y1000) decreased with increasing PMDA (Figure 3). The results demonstrate that the process according to the invention enable control of the mixing torque (viscosity) of a polyhydroxyalkanoate through controlling the amine concentration over a small range (0-30 mM).

Furthermore, the proposed inventive process appears to occur shortly, which is useful for scaling the inventive process and formulations to larger processing equipment with shorter residence time. In Figure 3, the mixing torque for all samples is less than the control sample without PMDA at the same time interval.

Finally, this example shows that it is possible to accomplish the inventive process with 100% bio-sourced and compostable raw materials (PMDA and polyhydroxyalkanoate) which makes it possible to obtain a bio-based and compostable product.

However, the process was not effective for polycaprolactone (PCL), which is another compostable aliphatic polyester: even at very high HMDA concentration (86 mM), the mixing torque did not decrease below 20 Nm (Figure 4).

### Example 4: Implementation of different amines

Processing was performed on a preheated Xplore Instruments micro compounder MC-15 by mixing the polyhydroxyalkanoate (ENMAT Y1000) and amine (concentration of 5 mM unless otherwise indicated) at a screw speed of 100 RPM in recirculation mode for 5 minutes at setpoint temperature of 180°C. The material was then extruded, air cooled rapidly, and collected.

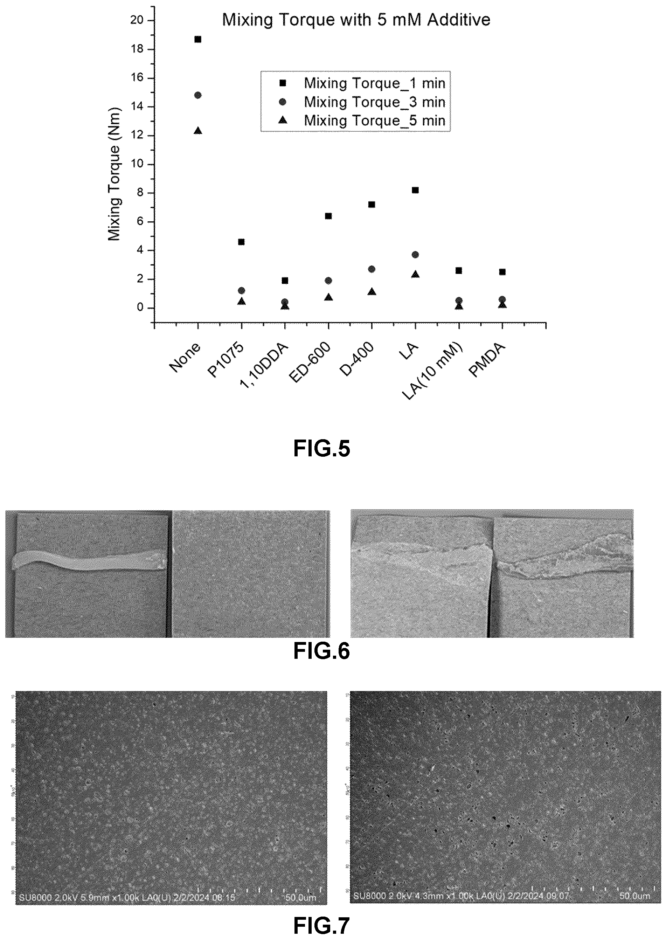

The mixing torque was determined according to Example 1 and the results appear in Figure 5, wherein P1075 is Priamine^{™} 1075, 1,10DDA is 1,10-decanediamine, ED-600 is Jeffamine^{®} ED-600, D-400 is Jeffamine^{®} D-400, LA is laurylamine and PMDA is 1,5-pentanediamine.

The process according to the invention is effective with several types of amines. Effective amines may have, for example, one or multiple amine groups, high or low molecular weight and high or low polarity (Figure 5).

It should be noted that LA is a monoamine and thus has 50% fewer amine groups than PMDA at the same molar concentration. However, doubling the LA concentration to achieve the same molar equivalent number of amine groups as PMDA generated very similar mixing torque response.

Figure 5 also shows that the process according to the invention functions with amines that can be completely or partially bio-sourced, such as P1075, PMDA, HMDA (see previous examples), and 1,10DDA. This shows the usefulness of the inventive process to reduce the molecular weight and viscosity while using 100% bio-based and/or compostable raw materials.

### Example 5: Hot melt adhesives

Processing was performed on a Xplore Instruments micro compounder MC-15 preheated to a setpoint temperature of 180 °C. ENMAT Y1000P was added and then mixed at a screw speed of 100 RPM for 1 min in recirculation mode. Next SYLVARES^{™} TP300 was added to achieve a 1:1 mass ratio to the ENMAT Y1000P, and the HMDA (17.2 mM) was added as well. The material was mixed for an additional 2 minutes in recirculation mode.

The mixing torque, fiber tear adhesion, peak melting temperature and melting enthalpy were determined according to Example 1 and the results are indicated in Table 2. Figure 6 also shows the cardboard substrates after the fiber tear test (left: HM1, right: HM2).

**Table 2: Comparison of hot melt adhesives**

| **Composition** | **HM1 (comparative)** | **HM2 (invention)** |
|---|---|---|
| ENMAT Y1000P (wt%) | 50 | 49.9 |
| SYLVARES^{™} TP300 (wt%) | 50 | 49.9 |
| HMDA (mM) | 0 | 17.2 |

| **Properties** | | |
|---|---|---|
| Mixing Torque (Nm) | 1.2 | 0.3 |
| Fiber Tear Adhesion (%) | 0 | 23 |
| Peak Melting Temp. (°C) | 152.0 | N/A |
| Melting Enthalpy (J/g) | 18.4 | N/A |

The results in Table 2 and Figure 6 indicate that HM2 has reduced mixing torque (viscosity) and improved adhesive performance.

HM1 did not demonstrate fiber tear at all, and Figure 6 shows that the high viscosity material did not wet out and penetrate the cardboard substrate. HM2 showed improved wet out and consequently demonstrated fiber tear on 23% of the bonded surfaces.

Thermal analysis indicates that HM2 has decreased crystallinity and/or rate of crystallization within the conditions of the DSC test. Indeed, HM2 did not show a melting peak on the second heating nor recrystallization peak during cooling. In contrast, HM1 showed a melting peak on the second heating due to the highly crystalline nature of ENMAT Y1000P. The results demonstrate the reduced crystallinity/crystallization rate of the hot melt adhesive according to the invention. Low crystallinity is often advantageous for hot melt adhesives with good aged bond performance.

### Example 6: Polymer blends

Processing was performed on a Xplore Instruments micro compounder MC-15 preheated to a setpoint temperature of 180°C. Capa^{®} 6800 was added and then mixed at a screw speed of 100 RPM for 1 minute in recirculation mode. Next ENMAT Y1000P and 1,10DDA were added. The material was mixed for an additional 1 minute at 50 RPM and then an additional 2 minutes at 20 RPM in recirculation mode.

The mixing torque (at 20 RPM) and average droplet diameter were determined according to Example 1 and the results are indicated in Table 3. Figure 7 also shows the images of the samples by Scanning Electron Microscopy at 1000x magnification (left: PB1, right: PB2).

**Table 3: Comparison of polymer blends**

| **Composition** | **PB1 (comparative)** | **PB2 (invention)** |
|---|---|---|
| ENMAT Y1000P (g) | 2 | 2 |
| Capa^{®} 6800 (g) | 13 | 13 |
| 1,10DDA (mg) | 0 | 5.2 |

| **Properties** | | |
|---|---|---|
| Mixing Torque (Nm) | 8.1 | 6.7 |
| Average droplet diameter (µm) | 1.20 | 0.96 |

The mixing torque data in Table 3 show decreased viscosity for PB2 compared to PB1 (without the amine compound). It should be noted that Example 3 showed that polyhydroxyalkanoate mixing torque decreases significantly during the process according to the invention, whereas the mixing torque of polycaprolactone does not. Accordingly, the viscosity decrease in the present example is attributed to viscosity reduction in the polyhydroxyalkanoate domains only. The results demonstrate the usefulness of the invention to reduce the viscosity of polymer blends comprising polyhydroxyalkanoate and other polymer(s).

Furthermore, the morphology results in Figure 7 and summarized in Table 3 show that the process and polymer blend according to the invention may control the morphology of polymer blends comprising polyhydroxyalkanoate and other polymer(s). The images in Figure 7 show that the size of polyhydroxyalkanoate droplets in a continuous polycaprolactone matrix decreases with the composition according to the invention. Comparing PB2 to PB1 (control without the amine) the number average diameter of droplets decreases. The results are attributed to the decrease of viscosity of the polyhydroxyalkanoate phase.

The results demonstrate the usefulness of the invention. By reducing the viscosity of only the polyhydroxyalkanoate phase in a polymer blend, the polymer blend according to the invention can control the viscosity ratio between immiscible polymer phases. Control of the polymer morphology is critical to the final properties, including but not limited to mechanical modulus (G), toughness (Izod Impact Strength), optical clarity, and compostability. For example, the impact resistance (Izod Impact Performance) of the polymer blend according to the invention will improve due to controlled particle size in the ideal size range for optimized impact resistance.

The viscosity ratio is a critical parameter for controlling the morphology of immiscible polymer blends. Accordingly, the process and composition according to the invention may be used to control the characteristic size of the dispersed phase, and therefore morphology, of immiscible polymer blends with polyhydroxyalkanoate. For example, increasing the concentration of the amine in the composition according to the invention will further decrease the size of the polyhydroxyalkanoate droplets.

Finally, the example shows the polymer blend and process according to the invention are effective and achievable through formulations with 100% compostable components. Therefore, the invention makes it possible to control the morphology of polyhydroxyalkanoate blends with other bio-based and/or compostable polymers (such as polylactic acid, polycaprolactone, thermoplastic starch, poly(butylene succinate-co-adipate)) in order to achieve formulations with compostable and/or bio-based raw materials.

## Claims

1. A process comprising melting a mixture (M1) at a temperature of at least 110°C to provide a mixture (M2), wherein the mixture (M1) comprises:
- a polyhydroxyalkanoate comprising repeating units derived from 3-hydroxypropionic acid, 3-hydroxybutyric acid, 3-hydroxyvaleric acid, 4-hydroxybutyric acid, 5-hydroxyvaleric acid and/or 3-hydroxyhexanoic acid, and
- an amine.

2. The process according to claim 1, wherein the melting step is performed with a melting device being a continuous melt processing device.

3. The process according to claim 1 or 2, wherein the polyhydroxyalkanoate comprises more than 70 mol% of repeating units derived from 3-hydroxypropionic acid, 3-hydroxybutyric acid, 3-hydroxyvaleric acid, 4-hydroxybutyric acid and/or 5-hydroxyvaleric acid, preferably 3-hydroxybutyric acid, 3-hydroxyvaleric acid and/or 4-hydroxybutyric acid.

4. The process according to any one of claims 1 to 3, wherein the amine comprises a primary amine group.

5. The process according to any one of claims 1 to 4, wherein the amine content in the mixture (M1) is such that the molar equivalent concentration amine / polyhydroxyalkanoate is of at least 0.8 mmol/kg.

6. The process according to any one of claims 1 to 5, further implementing one or more additional ingredients other than the polyhydroxyalkanoate and the amine.

7. The process according to any one of claims 1 to 6, wherein the process does not implement a solvent.

8. The process according to any one of claims 1 to 7, further comprising a vacuum degassing step.

9. The process according to any one of claims 1 to 8, further comprising a discharging step after the melting step.

10. The process according to any one of claims 1 to 9, further comprising a cooling step after the melting step.

11. A composition obtainable by the process according to any one of claims 1 to 10.

12. The composition according to claim 11, wherein the process implements an amine having a boiling point of more than 170°C in the mixture (M1).

13. The composition according to claim 11 or 12, being under the form of a hot-melt adhesive and comprising a tackifying resin.

14. Use of the composition according to claim 11 or 12 as a thermoplastic resin, a hot-melt adhesive or a polymer blend.

15. An article comprising the composition according to any one of claims 11 to 13.
